(19) **Europäisches Patentamt**

**European Patent Office**

**Office européen des brevets**

(11) Veröffentlichungsnummer: **0 251 289 B1**

(12) # EUROPÄISCHE PATENTSCHRIFT

(45) Veröffentlichungstag der Patentschrift:
16.10.91 Patentblatt 91/42

(51) Int. Cl.⁵: **F02C 7/32**

(21) Anmeldenummer: **87109380.3**

(22) Anmeldetag: **30.06.87**

(54) **Gasturbinentriebwerk.**

(30) Priorität: **01.07.86 DE 3622022**

(43) Veröffentlichungstag der Anmeldung:
**07.01.88 Patentblatt 88/01**

(45) Bekanntmachung des Hinweises auf die
Patenterteilung:
**16.10.91 Patentblatt 91/42**

(84) Benannte Vertragsstaaten:
**DE ES FR GB IT**

(56) Entgegenhaltungen:
**CH-A- 520 266**
**DE-A- 3 143 389**
**DE-C- 1 124 823**
**GB-A- 703 262**
**GB-A- 973 388**
**US-A- 3 626 692**

(73) Patentinhaber: **BMW Rolls-Royce GmbH**
**Hohemarkstrasse 60 - 70**
**W-6370 Oberursel (DE)**

(72) Erfinder: **Brockmann, Heinz**
**Holzweg 25**
**W-6380 Bad Homburg 6 (DE)**

(74) Vertreter: **Bücken, Helmut**
**Bayerische Motoren Werke**
**Aktiengesellschaft Postfach 40 02 40**
**Petuelring 130 - AJ-30**
**W-8000 München 40 (DE)**

**Beschreibung**

Die Erfindung bezieht sich auf ein Gasturbinentriebwerk gemäß dem Oberbegriff des Anspruchs 1.

Aus der GB-A-973 388 ist es bekannt, einen Hilfsgeräteantrieb von einem Hochdruckrotor oder einem Niederdruckrotor eines Gasturbinentriebwerks anzutreiben, wobei der jeweils schneller drehende Rotor mit dem Hilfsgeräteantrieb verbunden ist. Der langsam laufendere Rotor ist jeweils über eine Freilaufvorrichtung von dem Hilfsgeräteantrieb getrennt. Somit bildet grundsätzlich die schneller drehende Rotorwelle die Antriebswelle für den Hilfsgeräteantrieb.

Im allgemeinen wird die zum Betrieb der Hilfsgeräte notwendige Nebenleistung dem Hochdruckrotor entnommen. Dies ergibt sich durch die normalerweise höheren Drehzahlen dieses Rotors, wobei hinzukommt, daß der Hochdruckrotor beim Starten des Gasturbinentriebwerks zunächst über einen Starter hochgefahren werden muß und der Starter meist an einem Hilfsgeräteantrieb angebaut ist.

Es gibt im Flug für das Gasturbinentriebwerk aber kritische Flugzustände, bei denen eine Entnahme von Nebenleistung vom Hochdruckrotor nachteilig ist. Wenn z.B. aus Teillast heraus beschleunigt werden soll, muß zuerst der Hochdruckrotor auf hohe Drehzahlen gebracht werden, was durch gleichzeitige Entnahme von Nebenleistungen ungünstig beeinflußt wird. Außerdem kann in großen Flughöhen beiniedrigen Fluggeschwindigkeiten der Hochdruckrotor nahe an der Pumpgrenze fahren und die Brennkammer in der Nähe der Verlöschungsgrenze betrieben werden, so daß auch hier eine zusätzliche Leistungsentnahme unerwünscht ist. All diese Betriebsparameter berücksichtigt das in der GB-A-973 388 beschriebene Gasturbinentriebwerk bzgl. der Abnahme der Nebenleistung zum Antrieb des Hilfsgeräteantriebes nicht.

Aus der CH-A-520,266 ist ein Gasturbinentriebwerk bekannt, welches sich aber nicht zum Fluganttrieb eignet. Es wird ausschließlich für industrielle Zwecke oder zur Verwendung als Antriebseinrichtung für Fahrzeuge verwendet. Hierzu weist dieses Gasturbinentriebwerk eine mit einem Verdichter koppelbare Verdichterturbine sowie eine Hilfsturbine und eine Leistungsturbine auf. Hierbei ist es möglich, die Schaufeln der Hilfsturbine und der Leistungsturbine so anzuordnen, daß verschiedene Drehrichtungen erzielt werden. Mit Hilfe einer Kupplung läßt sich dann die Hauptabtriebswelle mit den in verschiedenen Drehrichtungen drehenden Turbinen kuppeln. Die Hilfsabtriebswelle ist hierbei direkt mit der Hilfsturbine gekuppelt und kann nur über eine Freilaufkupplung mit der Leistungsturbine verbunden werden. Hochdruckrotoren und Niederdruckrotoren sind hierbei nicht beschrieben.

Die weiterhin bekanntgewordene US-A-3,226,692 beschreibt eine Gasturbinenanlage zum überwiegend stationären Einsatz. Bei dieser Gasturbinenanlage ist eine schaltbare, fernbedienbare Doppelkupplung beschrieben um am Abtriebsstrang unterschiedliche Drehzahlen oder Drehmomente zur Verfügung zu stellen, je nachdem, welcher Getriebezweig geschaltet wird.

Aufgabe der Erfindung ist es, bei einem Gasturbinentriebwerk mit zumindest einem von einem Niederdruckrotor oder einem Hochdruckrotor antreibbaren Hilfsgerät unter allen Einsatzbedingungen einen sicheren Betrieb des Gasturbinentriebwerks zu gewährleisten, wobei die Hilfsgeräte jederzeit mit der benötigten Energie betrieben werden können.

Diese Aufgabe wird bei dem erfindungsgemäßen Gasturbinentriebwerk dadurch gelöst, daß die Doppelkupplung fernbedienbar ist, wobei das zumindest eine Hilfsgerät wahlweise von dem Hochdruckrotor oder dem Niederdruckrotor antreibbar ist.

Damit kann beispielsweise bei sich abzeichnenden kritischen Flugzuständen der Hilfsgeräteantrieb frühzeitig auf den Niederdruckrotor umgeschaltet werden, um die in dem Hochdruckrotor erzeugte Energie ausschließlich in Schub umzusetzen. Demzufolge werden außerdem kritische Zustände bezüglich der Leistungsversorgung der Hilfsgeräte sicher vermieden, da ein "Absterben" eines Rotors durch das bewußte Umschalten des Hilfsgeräteantriebs sicher vermieden wird.

In Weiterbildung der Erfindung ist, die fernbedienbare Doppelkupplung als hydraulisch schaltbare Mehrscheiben-Lamellenkupplung ausgeführt. Diese Kupplungsform hat sich als besonders zuverlässig und als mit geringem gerätetechnischen Aufwand betreibbar herausgestellt. Ein Hydraulikkreis ist bei jedem Gasturbinentriebwerk ohnehin vorhanden, so daß zur Betätigung der Mehrscheiben-Lamellenkupplung nur ein entsprechend gesteuerter Hydraulikkreis abgezweigt werden muß.

Anspruch 3 beschreibt eine vorteilhafte mechanische Lösung zum Antrieb des Hilfsgeräteantriebs. Dabei ist konzentrisch zu einer ersten Welle, die über einen Kegelradantrieb mit dem Hochdruckrotor verbunden ist, eine zweite Welle angeordnet, die über einen zweiten Kegelradantrieb dauernd von dem Niederdruckrotor angetrieben wird. Durch die konzentrische Anordnung der beiden Wellen ist nur ein geringer Raumbedarf für die Herausführung der mechanischen Energie aus dem Gasturbinentriebwerk erforderlich. Weiterhin ist die Lagerung der konzentrisch zueinander angeordneten Wellen in dem Gasturbinentriebwerksgehäuse einfach und auch die Abdichtung der Wellendurchtritte an dem Gasturbinengehäuse ist umkompliziert.

In Weiterbildung der Erfindung wird die Doppelkupplung bzw. der die Doppelkupplung betätigende Hydraulik-Schaltkreis von einer elektronischen Steuereinrichtung betätigt. In der elektronischen Steuereinrichtung werden sämtlich Parameter, die bei der Entscheidung, mit welchem Rotor der Hilfsgeräteantrieb gekuppelt werden soll, verarbeitet werden. Als wichtige Parameter werden benötigt : die Drehzahlen des Niederdruckrotors und des Hochdruckrotors, die den Brennkammern des Gasturbinentriebwerks zugeführte Brennstoffmenge, der Luftdruck eingangs und ausgangs des Niederdruckrotors und des Hochdruckrotors sowie die Drehmomente des Niederdruckrotors, des Hochdruckrotors und des Hilfsgeräteantriebs. Diese Werte, die bei Bedarf um zusätzliche gemessene Parameter (beispielsweise Temperaturen) ergänzt werden, werden mit in der elektronischen Steuereinrichtung abgespeicherten Werten verglichen und entsprechende Schaltbefehle an die Doppelkupplung gegeben.

Weitere Merkmale und Vorteile der Erfindung sind aus der folgenden Zeichnungsbeschreibung zu entnehmen, in der das in den Figuren dargestellte Ausführungsbeispiel der Erfindung beschrieben ist.

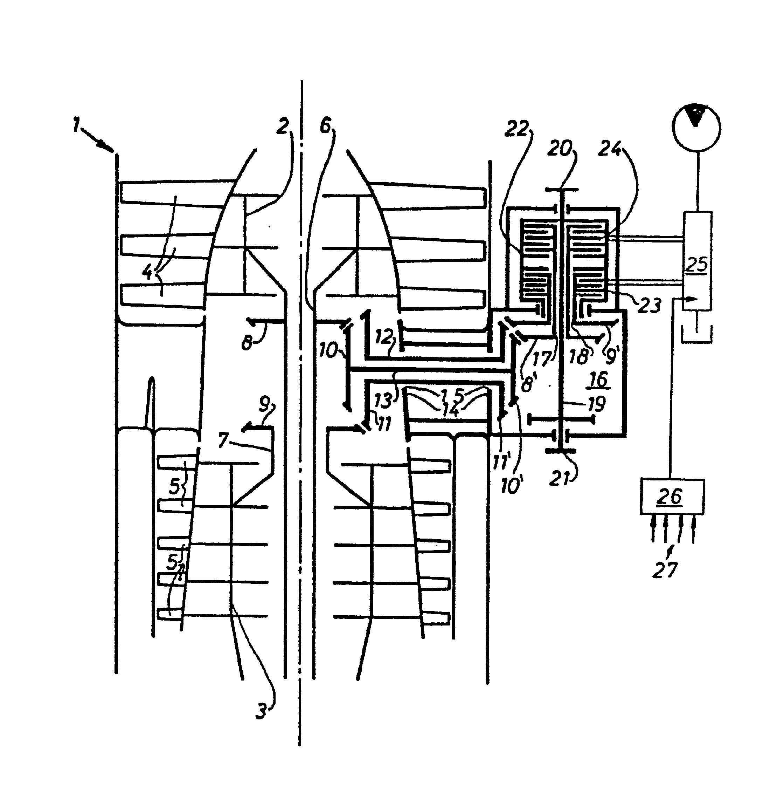

Die einzige Figur zeigt einen schematischen Schnitt durch den Erfindungsgemäßen Teil eines Gasturbinentriebwerks.

Das teilweise dargestellte Gasturbinentriebwerk 1 weist einen Niederdruckrotor 2 und einen Hochdruckrotor 3 auf. An dem Außenumfang des Niederdruckrotors 2 sowie des Hochdruckrotors 3 sind jeweils eine Vielzahl von Schaufeln 4 bzw. 5 befestigt. Befestigt sind die beiden Rotoren 2, 3 jeweils auf einer Niederdruckrotorwelle 6 sowie einer Hochdruckrotorwelle 7. Im Bereich zwischen dem Niederdruckrotor 2 und dem Hochdruckrotor 3 sind auf den beiden Rotorwellen 6,7 Kegelzahnräder 8,9 axial zueinander versetzt angeordnet, wobei die beiden Kegelzahnräder 8,9 jeweils mit einem weiteren Kegelzahnrad 10,11 zusammenwirken. Die zweiten Kegelzahnräder 10,11 sind um 90° gedreht zu den ersten Kegelzahnrädern 8,9 auf einer gemeinsamen Drehachse angeordnet. Die Kegelzahnräder 10,11 sind ihrerseits auf konzentrisch zueinander angeordneten Wellen 12,13 befestigt. Dabei steht die erste, äußere Welle 12, die das Kegelzahnrad 11 trägt, mit dem Kegelzahnrad 9, daß auf der Hochdruckrotorwelle 7 befestigt ist, im Eingriff. Dementsprechend steht die Welle 13 über den Kegelzahnrädern 10 und 8 mit der Niederdruckrotorwelle 6 in mechanischer Verbindung. Die erste Welle 12 und die zweite Welle 13 sind in dem Gasturbinentriebwerksgehäuse 14 gelagert und führen die Drehbewegungen der Rotoren 2,3 durch eine Öffnung 15 in einen Hilfsgeräteantrieb 16. In dem Hilfsgeräteantrieb 16 wird die Drehachse der Wellen 12 und 13 über weitere miteinander zusammenwirkende Kegelzahnräder 8′ 10′ sowie 11′ und 9′ in eine Drehachse parallel zu der Niederdruckrotorwelle 6 und der Hochdruckrotorwelle 7 umgelenkt. Die Kegelzahnräder 8′, 9′ sind wiederum auf Kupplungseingangswellen 17 und 18 befestigt. Die das Kegelzahnrad 8′ tragende Kupplungseingangswelle 17 ist dabei letztendlich mit der Niederdruckrotorwelle 6 und die Kupplungseingangswelle 18, die das Kegelzahnrad 9′ trägt, ist letztendlich mit der Hochdruckwelle 7 verbunden. Konzentrisch zu den beiden Kupplungseingangswellen 17 und 18 ist in dem Hilfsgeräteantrieb 16 eine Kupplungsausgangswelle 19 angeordnet. Die Kupplungsausgangswelle 19 bietet auf ihren aus dem Hilfsgeräteantriebsgehäuse herausragenden Enden 20 und 21 die Möglichkeit eine beliebige Anzahl von Hilfsgeräten anzutreiben.

Weiterhin ist in dem Hilfsgeräteantrieb 16 eine Hydraulisch schaltbare Mehrscheiben-Lamellenkupplung 22 angeordnet. Dabei kann über ein erstes Lamellenpaket 23 die Kupplungsausgangswelle 19 mit der Hochdruckrotorwelle 7 antriebsmäßig verbunden werden, während mit dem zweiten Lamellenpaket 24 die Kupplungsausgangswelle mit der Niederdruckrotorwelle 6 antriebsmäßig verbunden wird. Geschaltet wird die Mehrscheiben-Lamellenkupplung 22 von einem nicht näher dargestellten Hydraulikschaltkreis 25, der wiederum von einer nicht näher dargestellten elektronischen Steuereinrichtung 26 betätigt wird. Dabei verarbeitet die elektronische Steuereinrichtung als Eingangsparameter beispielsweise die Drehzahlen von Niederdruckrotor 2 und Hochdruckrotor 3, die der Brennkammer bzw. den Brennkammern des Gasturbinentriebwerks 1 zugeführt Brennstoffmenge, den Luftdruck eingangs und ausgangs des Niederdruckrotors 2 und des Hochdruckrotors 3 sowie das Drehmoment des Niederdruckrotors 2 und des Hochdruckrotors 3 und der Kupplungsausgangswelle 19 des Hilfsgeräteantriebs 16. Die entsprechenden Werte werden von Sensoren aufgenommen und der elektronischen Steuereinrichtung 26 zugeführt.

## Patentansprüche

1. Gasturbinentriebwerk (1) mit einem Hochdruckrotor (3) und einem Niederdruckrotor (2), die mechanisch entkoppelt voneinander rotieren, wobei ein Teil der Triebwerksleistung zum Antrieb von zumindest einem Hilfsgerät über einen Hilfsgeräteantrieb (16) abgezweigt wird, und wobei das zumindest eine Hilfsgerät entweder von dem Hochdruckrotor (3) oder von dem Niederdruckrotor (2) mittels einer aus zwei Kupplungen (23,24) bestehenden Doppelkupplung (22) antreibbar ist, dadurch gekennzeichnet, daß die Doppelkupplung (22) fernbedienbar ist, wobei das zumindest eine Hilfsgerät wahlweise von dem Hochdruckrotor (3) oder von dem Niederdruckrotor (2) antreibbar ist.

2. Gasturbinentriebwerk (1) nach Anspruch 1, dadurch gekennzeichnet, daß die fernbedienbare Doppelkupplung als hydraulisch schaltbare Mehrscheiben-Lamellenkupplung (22) ausgeführt ist.

3. Gasturbinentriebwerk (1) nach Anspruch 1 oder 2 mit einem von zumindest einem Rotor (2,3) über einen Kegelradantrieb (8, 8', 9, 9', 10, 10', 11, 11') und zumindest einer Welle (12, 13) antreibbaren Hilfsgeräteantrieb (16), dadurch gekennzeichnet, daß konzentrisch zu der ersten Welle (12) eine zweite Welle (13) angeordnet ist, wobei die erste Welle (12) dauernd von dem Hochdruckrotor (3) angetrieben ist und die zweite Welle (13) über einen zweiten Kegelradantrieb (8, 8', 10, 10') dauernd von dem Niederdruckrotor (2) angetrieben ist.

4. Gasturbinentriebwerk (1) nach Anspruch 1, dadurch gekennzeichnet, daß die Doppelkupplung von einer elektronischen Steuereinrichtung (26) schaltbar ist.

5. Gasturbinentriebwerk (1) nach Anspruch 2, dadurch gekennzeichnet, daß der die Mehrscheiben-Lamellenkupplung (22) betätigende Hydraulik-Schaltkreis (25) von einer elektronischen Steuereinrichtung (26) bedienbar ist.

6. Gasturbinentriebwerk (1) nach Anspruch 4 oder 5, dadurch gekennzeichnet, daß der von der elektronischen Steuereinrichtung (26) bewirkte Schaltvorgang in Abhängigkeit von an dem Gasturbinentriebwerk (1) gemessenen Parametern erfolgt.

## Claims

1. A gas turbine power plant (1) having a high-pressure rotor (3) and a low-pressure rotor (2) which rotate mechanically uncoupled from one another, a part of the power plant power being branched off for the drive of at least one accessory through an accessory drive system (16) and at least one accessory being driveable either by the high-pressure rotor (3) or by the low-pressure rotor (2) by means of a double clutch (22) comprising two clutches (23, 24), characterised in that the double clutch (22) is remotely operable, while the at least one accessory is driveable optionally by the high-pressure rotor (3) or by the low-pressure rotor (2).

2. A gas turbine power plant (1) according to Claim 1, characterised in that the remotely operable double clutch is made as a hydraulically-operable multi-disc plate clutch (22).

3. A gas turbine power plant (1) according to Claim 1 or 2, having an accessory drive system (16) driveable by at least one rotor (2, 3) through a bevel wheel drive system (8, 8', 9, 9', 10, 10', 11, 11') and at least one shaft (12, 13), characterised in that a second shaft (13) is arranged concentrically with the first shaft (12), the first shaft (12) being constantly driven by the high-pressure rotor (3) and the second shaft (13) being constantly driven through a second bevel wheel drive system (8, 8', 10, 10') by the low-pressure rotor (2).

4. A gas turbine power plant (1) according to Claim 1, characterised in that the double clutch is operable by an electronic control device (26).

5. A gas turbine power plant (1) according to Claim 2, characterised in that the hydraulic operating circuit (25) actuating the multi-disc plate clutch (22) is operable by an electronic control device (26).

6. A gas turbine power plant (1) according to Claim 4 or 5, characterised in that the shift operation effected by the electronic control device (26) takes place in dependence upon parameters measured on the gas turbine power plant (1).

## Revendications

1. Propulseur à turbine à gaz (1) avec un rotor haute pression (3) et un rotor basse pression (2), qui tournent en étant mécaniquement indépendants l'un de l'autre, une partie de la puissance de propulsion étant prélevée pour l'entraînement d'au moins un appareil auxiliaire par l'intermédiaire d'une boîte de transmission (16), et l'un au moins des appareils auxiliaires pouvant être entraîné soit par le rotor haute-pression (3), soit par le rotor basse pression (2) au moyen d'un embrayage double (22) consistant en deux embrayages (23, 24), propulseur caractérisé en ce que l'embrayage double (22) peut être commandé à distance, l'un au moins des appareils auxiliaires pouvant être entraîné au choix par le rotor haute pression (3) ou par le rotor basse pression (2).

2. Propulseur à turbine à gaz (1) selon la revendication 1, caractérisé en ce que l'embrayage double commandable à distance est réalisé sous la forme d'un embrayage (22) hydrauliquement commutable à disques multiples à lamelles.

3. Propulseur à turbine à gaz (1) selon les revendications 1 ou 2, avec une boîte de transmission (16) à des appareils auxiliaires pouvant être entraînée par au moins l'un des rotors (2, 3) au moyen d'une transmission à pignons d'angle (8, 8', 9, 9', 10, 10', 11, 11') et au moins l'un des arbres (12, 13), caractérisé en ce que concentriquement au premier arbre (12) est disposé un deuxième arbre (13), le premier arbre (12) étant en permanence entraîné par le rotor haute pression (3) et le deuxième arbre (13) étant en permanence entraîné par le rotor basse pression (2) au moyen d'une deuxième transmission à pignons d'angle (8, 8', 10, 10').

4. Propulseur à turbine à gaz (1) selon la revendication 1, caractérisé en ce que l'embrayage double peut être actionné par un dispositif de commande électronique (26).

5. Propulseur à turbine à gaz (1) selon la revendication 2, caractérisé en ce que le circuit hydraulique (25) actionnant l'embrayage (22) à disques multiples à lamelles peut être commandé par un dispositif de commande électronique (26).

6. Propulseur à turbine à gaz (1) selon les revendications 4 ou 5, caractérisé en ce que le processus d'embrayage actionné par le dispositif de commande électronique (26) est engagé en fonction de paramètres mesurés sur le propulseur à turbine à gaz (1).